# EUROPEAN PATENT SPECIFICATION

(11) **EP 0 861 602 B1**
(45) Date of publication and mention of the grant of the patent: **09.04.2003**
(21) Application number: 98301191.7
(22) Date of filing: 18.02.1998
(51) Int. Cl.: A23L 3/3436, B32B 27/18

(54) **Label-type oxygen absorbing agent**
Etikettförmiges sauerstoffabsorbierendes Mittel
Agent absorbant l'oxygène sous forme d'étiquette

(30) Priority: 19.02.1997 JP 3539997
(43) Date of publication of application: 02.09.1998
(73) Proprietor: MITSUBISHI GAS CHEMICAL COMPANY, INC., Tokyo 100-0005 (JP)
(72) Inventor: Nagata, Masaki, Mitsubishi Gas Chem. Co. Inc., Katsushika-ku, Tokyo 125 (JP); Hatakeyama, Hidetoshi, Mitsubishi Gas Ch. Co. Inc., Katsushika-ku, Tokyo 125 (JP); Nakaya, Futoshi, Mitsubishi Gas Chem. Co. Inc., Katsushika-ku, Tokyo 125 (JP); Fujimura, Hiromitsu, Mitsubishi Gas Chem. Co. Inc., Katsushika-ku, Tokyo 125 (JP); Motomura, Masazumi, Mitsubishi Gas Chem. Co. Inc., Katsushika-ku, Tokyo 125 (JP)
(74) Representative: Slingsby, Philip Roy

(56) References cited:
- EP-A- 0 225 593
- EP-A- 0 657 277
- WO-A-94/25263
- US-A- 5 486 158
- PATENT ABSTRACTS OF JAPAN vol. 095, no. 003, 28 April 1995 & JP 06 336816 A (DAIKEN TRADE & IND CO LTD;OTHERS: 01), 6 December 1994,
- PATENT ABSTRACTS OF JAPAN vol. 018, no. 487 (M-1671), 12 September 1994 & JP 06 158832 A (DAIKEN TRADE & IND CO LTD), 7 June 1994,

## Description

The present invention relates to a label-type oxygen absorbing agent to be pasted and fixed, which uses a sheet-shaped oxygen absorbing member made of a resin composition with an oxygen absorbing composition mixed therein. More particularly, this invention relates to a label-type oxygen absorbing agent with improved flexibility and deodorizing ability.

So-called oxygen absorber packaging, wherein an oxygen absorbing agent is utilized for oxygen absorbing packaging, of articles such as foodstuffs or pharmaceuticals which may be easily affected by the existence of oxygen has been widely employed in order to prevent such articles from deteriorating due to the existence of oxygen or eroding due to propagation of microbes and to maintain the quality of such articles. An oxygen absorbing agent bag (sometimes simply referred to as a "small bag"), which is made by filling a granular or powder oxygen absorbing agent in a gas-permeable small bag, is normally used for such oxygen absorber packaging. In these days, however, a sheet-shaped oxygen absorbing agent has been developed, which has, as an oxygen absorbing member, an oxygen absorbing resin sheet formed by mixing a powder or granular oxygen absorbing agent such as an iron powder-based oxygen absorbing agent in a thermoplastic resin and which exhibits superior oxygen absorbing performance (the Japanese Patent Laid-Open (Kokai) Publication No. HEI 2-72851).

The sheet-shaped oxygen absorbing agent can be manufactured as a multilayered member by fixing an oxygen absorbing agent in a thermoplastic resin to obtain a sheet-shaped oxygen absorbing member and by coating the sheet-shaped oxygen absorbing member with a coating material such as a film or a sheet. The sheet-shaped oxygen absorbing agent has no fear of leakage of powder and granules of the oxygen absorbing agent due to, for example, breakage of a bag of the oxygen absorbing agent. Moreover, the sheet-shaped oxygen absorbing agent is uniformly flat and thin and easy to handle and, therefore, is suitable for automatic pasting. As attention is paid to such a form of the sheet-shaped oxygen absorbing agent and to characteristics of the multilayered structure, a label-type oxygen absorbing agent is suggested in the Japanese Patent Laid-Open (Kokai) Publication No. HEI 7-219430 as an oxygen absorbing agent for the pasting and fixing purpose, which is given a label function by providing an adhesive layer on one surface of the sheet-shaped oxygen absorbing agent.

Recently, pasting of an oxygen absorbing agent to the inside surface of a package for foodstuffs or the like is incorporated into a step of automatically packaging an article and the pasting is also performed automatically in many cases. However, since a sheet-shaped oxygen absorbing member a conventional label-type oxygen absorbing agent is not always thin as a film, the flexibility of the conventional label-type oxygen absorbing agent is limited and the adaptability thereof to the automatic pasting and packaging is not sufficient. For example, even in a case where a package is a flexible film bag which seems that a label-type oxygen absorbing agent is easily pasted thereon, there are various problems if the automatic pasting and packaging is to be employed. In the case of a film bag, in many cases, as a packaging film with a label-type oxygen absorbing agent pasted thereon is used to form the bag, an article to be packaged is filled in the bag and is packaged. For example, when a horizontal pillow seal bag is formed, the label-type oxygen absorbing agent which has been pasted does not deform flexibly in conformance with the bending movement of the film, thereby hindering the bending movement of the film or causing the pasted label-type oxygen absorbing agent to fall off or come off. various forms of containers, other than a bag, are used as a package. However, the inside surface of a container is not always limited to a uniform flat surface. The conventional label-type oxygen absorbing agent lacks flexibility to closely adhere to such an inside surface of a container in conformance with the shape of the inside surface when an attempt is made to automatically paste the label-type oxygen absorbing agent to the inside surface of the container with certainty.

Moreover, the sheet-shaped oxygen absorbing agent including, as an oxygen absorbing member, a resin sheet made by mixing an oxygen absorbing agent in a thermoplastic resin sometimes emits an odor depending on conditions of use and, therefore, it is necessary to take deodorizing measures for the general use. A method of providing a deodorizing layer, which contains a deodorizing agent such as an activated carbon, on an oxygen absorbing resin layer is known (as in, for example, the Japanese Patent Laid-Open (Kokai) Publication No. HEI 7-227258). With a label-type oxygen absorbing agent of a one-surface absorption type which comprises an adhesive layer, there are problems concerning the location and structure of the deodorizing layer when the oxygen absorbing performance is given the highest priority and, therefore, the deodorizing effect of the deodorizing layer cannot always be fully exhibited.

US-A-5,486,158 discloses a grooved hydrocolloidal dressing or bandage for covering wounds, burns or similar damages of the human skin, or ostomi openings.

WO-A-94/25263 discloses a moisture -sensitive label.

It is one aim of the present invention to solve the above-described problems about the flexibility of and the deodorizing measures for the conventional label-type oxygen absorbing agent and to provide a label-type oxygen absorbing agent suitable for automatic pasting and packaging. Namely, it is one aim of this invention to improve the flexibility of the label-type oxygen absorbing agent, while it is another aim of this invention to improve the deodorizing ability of the label-type oxygen absorbing agent.

As the means to solve the above-described problems concerning the flexibility of the label-type oxygen absorbing agent, which is the first aim of this invention, the label-type oxygen absorbing agent according to this invention comprises a separator layer, a base layer comprising an adhesive surface on the side in contact with the separator layer, a sheet-shaped oxygen absorbing member which comprises an oxygen absorbing resin layer made of a thermoplastic resin with an oxygen absorbing composition dispersed therein, and a gas permeable layer, and these layers are laminated in the order listed above, and the base layer and the gas permeable layer are adhesively attached to each other without the existence of the sheet-shaped oxygen absorbing member along the periphery of the label-type oxygen absorbing agent. Such a label-type oxygen absorbing agent is characterized in that the sheet-shaped oxygen absorbing member has a groove cut from at least one surface thereof toward the opposite surface thereof.

According to one aspect of this invention, the use of the sheet-shaped oxygen absorbing member with a groove (half cut) cut from at-least one surface thereof toward the opposite surface thereof makes it possible to give such flexibility to the label-type oxygen absorbing agent as to allow the oxygen absorbing agent fully adaptable to the automatic pasting and packaging.

In order for the label-type oxygen absorbing agent according to this invention to become sufficiently flexible, it is desirable that the total length of the groove over the surface of the sheet-shaped oxygen absorbing member be 0.02 mm/m² or more as regards the size (projected area) of the sheet. It is also desirable that the groove in the sheet-shaped oxygen absorbing member be formed with a depth which makes the thickness of the remaining uncut portion of the sheet 0.01-0.5 mm from the bottom of the groove to the opposite uncut surface of the sheet. Moreover, a pattern formed by the above-mentioned groove on the sheet surface is not necessarily limited, but may be any pattern as long as the object of this invention can be attained.

As a means to solve the above-described problems concerning the deodorizing measures for the label-type oxygen absorbing agent, which is the second aim of this invention, the label-type oxygen absorbing agent according to one aspect of this invention comprises a separator layer, a base laye comprising an adhesive layer on the side in contact with the separator layer, a sheet-shaped oxygen absorbing member which comprises an oxygen absorbing resin layer made of a thermoplastic resin with an oxygen absorbing composition mixed therein, and a gas permeable layer, and these layers are laminated in the order listed above, and the base layer and the gas permeable layer are adhesively attached to each other without the existence of the sheet-shaped oxygen absorbing member along the periphery of the label-type oxygen absorbing agent. Such a label-type oxygen absorbing agent is characterized in that the sheet-shaped oxygen absorbing member has a deodorizing layer attached through an adhesive layer to the base layer side of the oxygen absorbing resin layer and has air holes pierced through the adhesive layer.

According to an aspect of this invention, with the sheet-shaped oxygen absorbing member having the deodorizing layer which is used in the label-type oxygen absorbing agent and which is adhesively attached to the base layer side of the oxygen absorbing resin layer through the adhesive layer, provision of the air holes pierced through the adhesive layer makes ventilation from the oxygen absorbing resin layer to the deodorizing layer easier and, therefore, the deodorizing layer is capable of fully exhibiting its deodorizing performance.

In order for the deodorizing layer to fully exhibit its deodorizing performance with the label-type oxygen absorbing agent according to this invention, it is desirable that the size (projected area) of one air hole pierced through the adhesive layer of the sheet-shaped oxygen absorbing member be at least 0.01 mm² and the number of air holes be from 1 to 5000 per 1 cm² area (projected area) of the adhesive layer. It is also desirable that the air hole be pierced from the deodorizing-layer-side surface of the sheet-shaped oxygen absorbing member and through the adhesive layer and reaches the oxygen absorbing resin layer.

Moreover, an aspect of this invention relates to a label-type oxygen absorbing agent concerning which both the flexibility and the deodorizing ability have been improved. Namely, an aspect of this invention provides a label-type oxygen absorbing agent which comprises a separator layer, a base layer comprising an adhesive surface or an adhesive layer on the side in contact with the separator layer, a sheet-shaped oxygen absorbing member which comprises an oxygen absorbing resin layer made of a thermoplastic resin with an oxygen absorbing composition dispersed therein, and a gas permeable layer, and the above-listed layers are laminated in the order listed above. The base layer and the gas permeable layer are adhesively attached to each other without the existence of the sheet-shaped oxygen absorbing member along the periphery of the label-type oxygen absorbing agent. This label-type oxygen absorbing agent is characterized in that the sheet-shaped oxygen absorbing member has a groove cut from at least one surface thereof toward the opposite surface thereof, and that a deodorizing layer is attached through an adhesive layer to the base layer side of the oxygen absorbing resin layer and an air hole piercing through the adhesive layer is provided.

Furthermore, an aspect of this invention provides a label-type oxygen absorbing agent wherein a laminated member (label-type oxygen absorbing agent) which comprises the base layer having the adhesive surface, the oxygen absorbing resin layer and the gas permeable layer is adhesively attached intermittently and successively to the separator layer in a strip shape.

Figure 1 is a sectional view of a label-type oxygen absorbing agent.

Figure 2 is a sectional view of a label-type oxygen absorbing agent.

Figure 3 is a sectional view of a continuous member of label-type oxygen absorbing agents.

Figure 4 is a sectional view of a continuous member of label-type oxygen absorbing agents.

Figure 5 shows sectional views of embodiments of a sheet-shaped oxygen absorbing member with grooves cut therein.

Figure 6 shows patterns of grooves cut in the surface of the sheet-shaped oxygen absorbing member.

Figure 7 shows sectional views of embodiments of a sheet-shaped oxygen absorbing member with air holes provided in a deodorizing layer.

Figure 8 shows examples of distribution of air holes pierced through the deodorizing layer side of the sheet-shaped oxygen absorbing member.

This invention is hereinafter explained with reference to drawings.

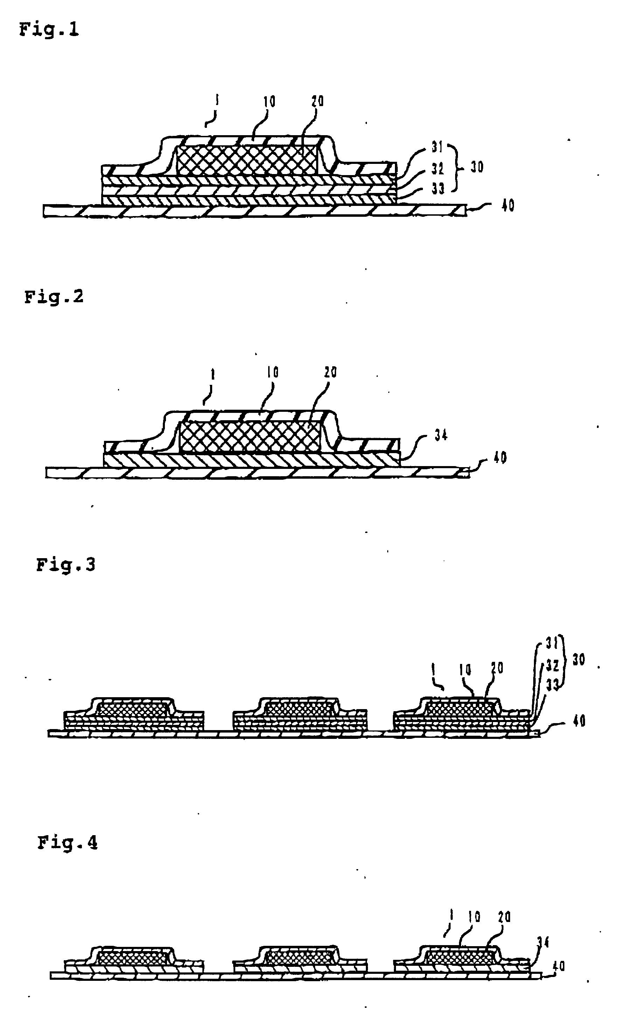

Structure examples of the label-type oxygen absorbing agent according to this invention are shown in Figures 1 and 2. Figure 1 shows an oxygen absorbing agent which is structured in a manner such that a separator layer 40, a base layer 30 with an adhesive layer 31 and an adhesive layer 33 placed over a base material 32, a sheet-shaped oxygen absorbing member 20 and a gas permeable layer 10 are laminated in the order listed above and the gas permeable layer and the base layer are directly and adhesively attached to each other on the periphery of the sheet-shaped oxygen absorbing member 20 so that the oxygen absorbing layer is not exposed. Figure 2 shows an example of a label-type oxygen absorbing agent with a simpler structure which uses, instead of the above-mentioned base layer 30 (which comprises three layers), a base layer 34 (which comprises one layer) made of a base material impregnated with an adhesive substance.

Figures 3 and 4 show examples of the label-type oxygen absorbing agents indicated in Figures 1 and 2, which are made into continuous members. Namely, they are the continuous members wherein a laminated member (label-type oxygen absorbing agent) which comprises the base layer 30 having the adhesive layer or the base layer 34, the sheet-shaped oxygen absorbing member 20 and the gas permeable layer 10 is adhesively attached intermittently and successively to the separator layer in a strip shape. Upon application to the automatic packaging of foodstuffs, the label-type oxygen absorbing agent is used in this product form of the continuous member.

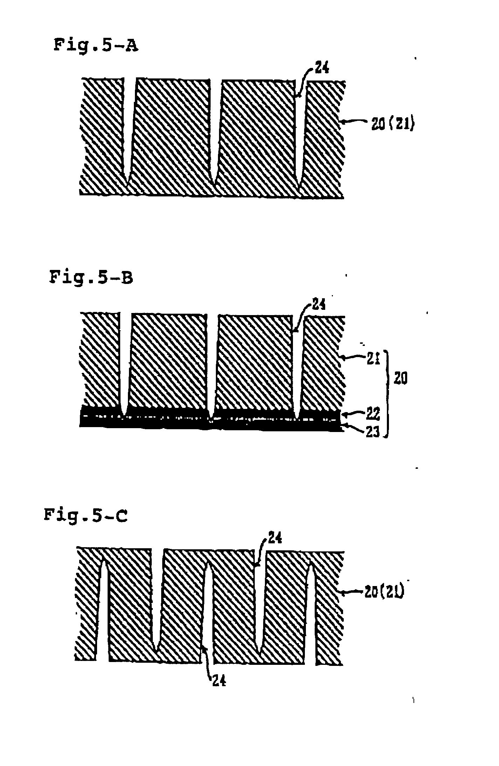

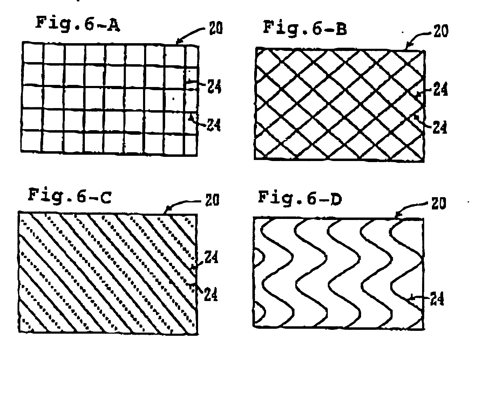

In order to give flexibility to the label-type oxygen absorbing agent according to this invention, grooves (half cuts) are cut from at least one surface of the sheet-shaped oxygen absorbing member 20 of the label-type oxygen absorbing agent shown in Figures 1 though 4 toward the opposite surface thereof. Figure 5 shows a cross section of the sheet-shaped oxygen absorbing member (oxygen absorbing resin layer) 20 with grooves 24 cut therein and Figure 6 shows examples of patterns cut by the grooves 24 on the surface of the sheet-shaped oxygen absorbing member (oxygen absorbing resin layer) 20. For example, Figure 5-A shows grooves cut from one surface of the sheet and Figure 5-C shows grooves cut alternately from both surfaces of the sheet. The grooves in the sheet are not necessarily limited to the examples of Figure 5, but may be formed as grooves cut from both surfaces at the same cross section position, leaving a central portion of the sheet uncut. In a case where the sheet-shaped oxygen absorbing member is a multilayered member made by laminating other layers such as a deodorizing layer 23 over the oxygen absorbing resin layer 21, as shown in Figure 5-B, the grooves 24 may pierce through the oxygen absorbing resin layer 21.

In order to give sufficient flexibility, it is preferable that the total length of the groove lines over the surface of the sheet-shaped oxygen absorbing member be 0.02 mm/m² or more as regards the size (projected area) of the sheet. As long as the sheet is not torn apart in its entirety as regards the thickness of the sheet-shaped oxygen absorbing member, it is also preferable that the groove be formed with a depth which makes the thickness of the sheet 0.01-0.5 mm from the bottom of the groove to the opposite uncut surface of the sheet. If the depth of the groove is shallow and the remaining uncut portion becomes thicker than 0.5 mm, advantages cannot be much expected. The deeper the groove is, the more flexible a finished product will become. However, if the depth of the groove becomes too deep and the thickness of the remaining uncut portion becomes less than 0.01 mm, the strength decreases and the sheet may easily break or fall off and becomes difficult to handle, which is not preferable. The depth of the groove should not necessarily be constant and, as long as the sheet is not torn apart, the groove may pierce through the sheet partly.

A line drawn on the sheet surface by the grooves cut in the sheet-shaped oxygen absorbing member may be a straight line or a curved line. Such a line may not necessarily be a continuous line, but may be a dotted line or an intermittent line like a perforated tear line. Namely, there are no specific limitations as long as the total length of the drawn line is preferably 0.02 mm/mm² or more as regards the projected area and the shape drawn by the line realizes flexibility to attain the object of this invention.

It is preferable that the groove lines be distributed uniformly on the sheet surface and patterns which will realize flexibility to make the sheet capable of bending in lengthwise and widthwise directions are preferred for the general use. Figure 6 shows pattern examples drawn by the groove lines on the sheet surface. It is preferable that the direction of a groove line is determined according to a desirable bending direction of the sheet. For example, if a lattice pattern shown in Figure 6-A or a rhombic pattern shown in Figure 6-B is selected, it is possible to give flexibility to the sheet in two directions. If flexibility is required in an oblique direction, an oblique pattern such as a rhombic shape (Figure 6-B) or a stripe shape (Figure 6-C) will make it possible to achieve the object. However, If there may be one desirable bending direction, only one straight line groove on the sheet surface may be sufficient as an extreme case. In such a case, it is not always necessary for grooves to be distributed over the entire sheet surface.

Moreover, it is possible to give flexibility freely in multiple directions by narrowing the distance between the grooves. It should be noted that if the distance between the grooves is too short, for example, a granular oxygen absorbing composition such as iron powder retained in the sheet would easily fall off. As such flexibility is sometimes required to freely comply with complicated shapes such as a curved surface, it is possible to give desirable flexibility by selecting an appropriate pattern according to the intended use and by properly adjusting the depth and direction of the grooves.

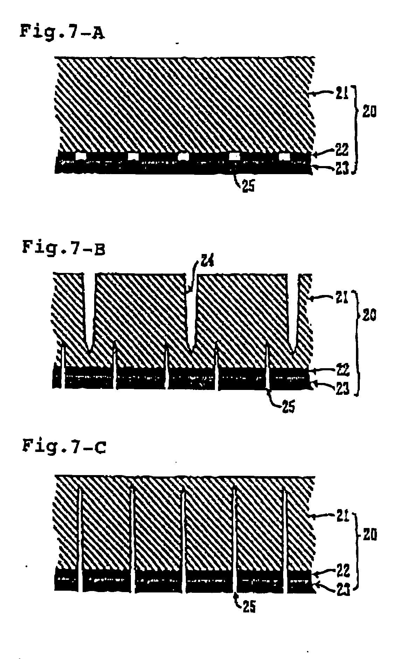

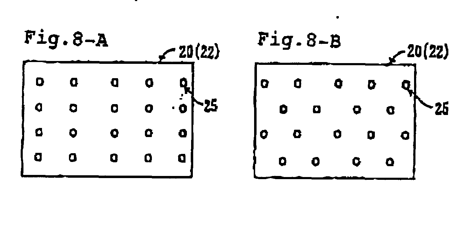

Next, in order to promote the deodorizing performance of the label-type oxygen absorbing agent according to this invention, the sheet-shaped oxygen absorbing member 20 used in the label-type oxygen absorbing agent shown in Figures 1 through 4 has a deodorizing layer laminated over and adhesively attached to the separator layer 40 side of the oxygen absorbing resin layer and air holes are pierced through an adhesive layer which is used to adhesively attach the deodorizing layer 23. Figure 7 shows examples of the sheet-shaped oxygen absorbing member 20 with air holes 25 made in the adhesive layer 22. Figure 8 shows pattern examples of the air holes 25 distributed over the adhesive layer.

As the means to make the air holes, there is, for example, a method of performing perforation processing on the sheet-shaped oxygen absorbing member or a method of utilizing a gas permeable adhesive layer in the process of manufacturing the sheet-shaped oxygen absorbing member. For example, a method of using a porous heat seal material or a gas permeable adhesive agent or a method of forming air holes by coating the sheet-shaped oxygen absorbing member with an adhesive agent in some pattern may be employed. Figure 7-A shows an example of the air holes 25 made in the adhesive layer 22. However, the air holes 25 may pierce through layers other than the adhesive layer 22. As a method of performing the.perforation processing, for example, Figure 7-B shows an example of the sheet-shaped oxygen absorbing member 20 with the grooves 24 and the air holes 25 provided therein. As shown in Figure 5-B, when the grooves 24 pierce through the adhesive layer 22, the grooves can also function as the gas permeable layer according to this invention. Particularly, regarding the method of performing the perforation processing from the deodorizing layer 23 side of the sheet-shaped oxygen absorbing member in which the deodorizing layer 23 is adhesively attached to the oxygen absorbing resin layer through the adhesive layer, a superior deodorizing effect can be obtained because the air holes pierce through the deodorizing layer 23, and this method is most preferred from the viewpoint of manufacturing easiness and costs. Figure 7-C shows the air holes 25 perforated from the deodorizing layer 23 side of the sheet-shaped oxygen absorbing member 20, and it does not matter whether or not the air holes 25 pierce through the oxygen absorbing resin layer 21 as long as they pierce through the adhesive layer 22 and reach the oxygen absorbing resin layer 21.

In order for the deodorizing layer provided in the sheet-shaped oxygen absorbing member to fully exhibit its deodorizing performance, the size (projected area) of one air hole pierced through the adhesive layer should be at least 0.01 mm² and the number of air holes can be selected as appropriate in the range of 1 to 5000 per 1 cm² area (projected area) of the adhesive layer. The air holes do not function sufficiently if the size of the air holes is large or if there are a large number of air holes and the air holes are distributed and partly concentrated in some place. Generally it is preferable that the air holes be widely and evenly distributed. However, the air holes should not necessarily be distributed over the entire sheet surface, but the objects of this invention can be attained by properly adjusting the distribution pattern according to the intended use or purposes.

A structure of the label-type oxygen absorbing agent is hereinafter specifically explained.

### (1) Sheet-Shaped Oxygen Absorbing Member

The sheet-shaped oxygen absorbing member consists of the oxygen absorbing resin layer made by dispersing an oxygen absorbing composition in a thermoplastic resin. Regarding the oxygen absorbing resin layer, the oxygen absorbing composition to be contained, the manufacturing method and the like are not necessarily limited as long as they comply with the objects of this invention. According to this invention, an oxygen absorbing sheet which utilizes various types of conventionally suggested thermoplastic resins can be used as the sheet-shaped oxygen absorbing member by performing the groove cut processing or the perforation processing.

Examples of the sheet-shaped oxygen absorbing member are: those made by dispersing an oxygen absorbing composition such as reducing inorganics or organics in a thermoplastic resin and by making the obtained mixture into a sheet form; and those made by dispersing a transition metal catalyst such as cobalt or iron in a thermoplastic resin such as polyolefin or polyamide and by making the obtained mixture into a sheet form. Among these examples, a resin sheet containing the oxygen absorbing composition which contains iron powder as a main ingredient is preferred from the viewpoint of the oxygen absorbing performance. Particularly, the sheet-shaped oxygen absorbing member made by dispersing the oxygen absorbing composition, which contains iron powder as its main ingredient, in a thermoplastic resin, drawing the obtained resin sheet and making micropores in the resin sheet is preferably used.

Examples of a thermoplastic resin to be used as the oxygen absorbing resin layer are olefin-based resins such as: low density polyethylene; high density polyethylene; polypropylene; ethylene and α-olefin copolymer; and polymethyl pentene.

Examples of the oxygen absorbing composition are: a metal-based oxygen absorbing composition containing, as the main ingredient, a metal component such as iron powder; and an organic-based oxygen absorbing composition containing, as the main ingredient, an organic component such as ascorbic acids, polyhydric alcohols or polyhydric phenols. Among the above-mentioned examples, the iron powder-based oxygen absorbing composition is preferred. The iron powder-based oxygen absorbing composition contains iron powder and metal halide salts as the main ingredients and it is preferably used in the form of so-called coated iron powder, that is, iron powder with its surface coated with metal halide salts. Moreover, in addition to the main ingredients which are the iron powder and metal halide salts, other ingredients such as activated carbon or a filler material which is slightly soluble with water are sometimes added to the iron powder-based oxygen absorbing composition if necessary.

Preferred examples of the iron powder to be used for the iron powder-based oxygen absorbing composition are reduced iron, electrolytic iron powder and spray iron powder. A smaller particle size of the iron powder is preferred and a median diameter of the iron powder particle on a weight basis should be preferably 100 µm or less, and more preferably 50 µm or less. As the metal halide, for example, sodium chloride, potassium chloride, barium chloride, calcium chloride and magnesium chloride are used. The metal halide is used in the proportion of 0.1 to 15 parts by weight, preferably 0.1 to 5 parts by weight, to 100 parts by weight of the iron powder.

The sheet-shaped oxygen absorbing member is made by: mixing and kneading the iron powder-based oxygen absorbing composition in the proportion of 85 to 25 wt% with 15 to 75 wt% of the above-described thermoplastic resin; melting the mixture; forming the molten mixture into a sheet shape; and drawing the obtained sheet in at least a uniaxial direction. A preferred expansion rate of drawing is in the range of 1.5 to 10 times, more preferably in the range of 3 to 10 times, to the original size. The drawing process makes micropores in the sheet. It is preferable that an appropriate thickness of the sheet-shaped oxygen absorbing member be selected in the range of 0.05 to 2.9 mm taking into consideration the purpose and intended use of the member. In order for the label-type oxygen absorbing agent according to this invention to acquire the oxygen absorbing performance at a level of practical use as the sheet-shaped oxygen absorbing agent of a one surface absorption type, the sheet-shaped oxygen absorbing member needs to have a preferred oxygen absorption velocity of 100 ml/m²·Hr(25°C) or more, more preferably 200 ml/m²·Hr(25°C) or more. The above-described resin sheet which is drawn and has micropores best serves the purpose.

The sheet-shaped oxygen absorbing member which requires water for the oxygen absorption reaction can be used as an oxygen absorbing agent of either a water dependent type or a self-reactive type. However, it is preferable from the viewpoint of manufacturing or handling that the sheet-shaped oxygen absorbing member be used as the water dependent type which makes use of water evaporated from an article to be packaged. Moreover, it is possible to laminate another layer for the purpose of, for example, moisture absorption, water holding, absorption of gas other than oxygen, gas generation or deodorization. In this case, in order not to hinder the oxygen absorbing performance of the oxygen absorbing resin layer, another layer is normally laminated over and adhesively attached to the surface of the oxygen absorbing resin layer, which is the surface opposite to the side in contact with the gas permeable layer. Accordingly, it is preferred that air holes be made in the adhesive layer in order to promote ventilation between the oxygen absorbing resin layer and the additionally provided layer. Particularly, in a case of the deodorizing layer, the perforation processing performed on the adhesive layer noticeably improves the deodorizing effect.

As the deodorizing layer, a layer containing an activated carbon material is preferred. Examples of the layer containing an activated carbon material are: a layer (simply referred to as "activated carbon paper") made by blending powder activated carbon with a binder containing pulp or the like as its main ingredient and by forming the blended material into paper; or a layer made by forming fibrous activated carbon and resin fibers into a nonwoven cloth form. However, the activated carbon paper is preferred from the viewpoint of costs and easiness in handling. A preferred activated carbon content in the activated carbon paper is normally 5% or more. A particle diameter of activated carbon should be preferably 200 mesh or less, which means that activated carbon particles are capable of passing through a 200 mesh sieve, and more preferably 350 mesh or less. Examples of a method of adhesively attaching the deodorizing layer are: an extrusion lamination method which is normally employed; a dry lamination method; and a hot melt adhesion method. Among these methods, the extrusion lamination method is particularly preferred.

### (2) Gas Permeable Layer

The gas permeable layer has a function to prevent the sheet-shaped oxygen absorbing member from contacting an article to be packaged by covering the sheet-shaped oxygen absorbing member and also has a function to properly adjust oxygen and moisture permeation in order to make the oxygen absorbing resin layer absorb oxygen.

A gas permeable material generally used as a packaging material of an oxygen absorbing agent package may be used as the gas permeable layer. For example, a packaging material wherein a perforated film is laminated on one or both surfaces of paper, waterproof nonwoven cloth, a microporous film made of polyolefin, or synthetic paper, or a combination of such single layer material and other gas permeable films can be used. It is also possible to use various types of a laminated packaging material with gas permeable side edges, which has low gas permeability on its top surface and utilizes gas permeability on its side edges. When adhesion between the gas permeable layer and the base layer is conducted by means of an adhesive agent, a single layer film of silicon resin, fluorocarbon resin or polymethyl pentene, or a single layer of any fabric or paper of which heat sealability is weak can also be used as the gas permeable layer. Moreover, if an article to be stored is liquid or has a high water content, iron rust is prevented from eluting from the sheet-shaped oxygen absorbing member by selecting a gas permeable material which is resistant to liquids. In order to display characters, symbols or the like on the top surface of the gas permeable layer, it is preferable that the outer most layer be a gas permeable laminated material of a porous or nonporous transparent film. It is possible to prevent ink from contacting with and transferring to an article to be stored by placing an ink layer over the inside surface of the transparent film.

Concerning the gas permeable layer, it is preferable that the gas permeable layer larger than the sheet-shaped oxygen absorbing member be used, and that, as shown in Figure 1, the gas permeable layer be adhesively attached to the base layer through the adhesive layer of the base layer along the peripheral portion of the sheet-shaped oxygen absorbing member in order to prevent the side edges of the sheet-shaped oxygen absorbing member from being exposed. The gas permeable layer may not be adhesively attached to and fixed at the oxygen absorbing resin layer which is placed below the gas permeable layer. However, if it is to be adhesively attached to and fixed at the oxygen absorbing resin layer, it is necessary to pay attention not to hinder gas permeability of the gas permeable layer.

### (3) Base Layer

The base layer is composed of an adhesive base material at least on one surface thereof. For example, as shown in Figure 1, the base layer may be structured to have an adhesive layer placed on one surface of the base material and an adhesive layer placed on the other surface of the base material. Moreover, as shown in Figure 2, both surfaces of the base layer may be an adhesive base material made by impregnating the base material with an adhesive substance. Furthermore, the adhesive layer may be placed on one surface of the base material and the other surface may serve as a seal layer and may be composed of a base material which can be attached with heat and pressure to the gas permeable layer. When the gas permeable layer is adhesive, it is fine to only provide the adhesive layer on one surface of the base material.

The adhesive surface of the base layer has a function to adhesively attach the base layer to the separator layer. Upon the use of the label-type oxygen absorbing agent, after the separator layer is peeled off, the exposed adhesive surface has a function to paste and fix the label-type oxygen absorbing agent to a container.

It is desirable that, as a main ingredient of substances to compose the adhesive surface or the adhesive layer, copolymers or block copolymers of any one of an acrylic type, a styrene-isoprene-styrene type, a styrene-butadiene type, a styrene-butadiene-styrene type or a styrene-ethylene/ butylene-styrene type, or a combination of such copolymers or block copolymers be used. Moreover, for the purpose of adjustment of adhesive strength, additives such as tackifiere may be added to these main ingredients as appropriate.

As the base material for the base layer, a plastic film, nonwoven cloth, paper or the like can be used. A plastic film may be used as the base material, and the adhesive layer may be provided on one surface of the base material and the adhesive layer may be provided on the other surface of the base material. Moreover, the adhesive layer may be provided on one surface of the base material and a thermoplastic resin film may be laminated over the other surface thereof to provide the seal layer. Furthermore, a nonwoven cloth may be used as the base material by impregnating the nonwoven cloth with an adhesive substance, thereby making both surfaces of the base material adhesive.

It is possible to make the base layer obtain a notice label function by printing various notices on the adhesive surface side of the base material used for the base layer and by making a print surface transparent. In this case, print information such as a product name or notices is pasted on the inside surface of the label-type oxygen absorbing agent, so that such print information can be easily recognized from outside a transparent package. Moreover, printing for concealment, use of a nontransparent base material or use of a nontransparent adhesive layer B or A is preferred in order to conceal the inside of the label-type oxygen absorbing agent to maintain the fine appearance of a product and to enhance the commercial value of the product.

### (4) Separator Layer

The separator layer has a function to protect the adhesive surface of the base layer before use and to serve as a supporting member upon formation of a continuous label which comprises a series of label-type oxygen absorbing agents. When the label-type oxygen absorbing agent is to be used, the separator layer is peeled off. As the separator layer, a sheet of paper, a film, a metal foil or the like which is coated with a release agent such as a silicon resin or paraffin wax can be used. An appropriate type of the release agent is selected according to the property of the adhesive layer provided on the base layer so that moderate peelability will be obtained.

Any materials may be used for the separator layer as long as they have strength against machine use as required upon the manufacture and use of the label-type oxygen absorbing agent or continuous label-type oxygen absorbing agents. Appropriate materials are selected taking stiffness, shrinkage ratio, hygroscopic property and other factors into consideration so that size differences will not occur with other layers due to processing conditions and the separator layer will not warp or come off. Paper is generally used. However, it is desirable that a film or metal foil, which will not create dust at the time of processing, be used in order to cope with recent movements to eliminate dust in the food manufacturing environment.

With the label-type oxygen absorbing agent according to this invention, the above-described separator layer, the base layer having the adhesive layer, the oxygen absorbing resin layer made of the sheet-shaped oxygen absorbing member, and the gas permeable layer are laminated in the order listed above. Moreover, a continuous member of label-type oxygen absorbing agents is formed by intermittently and successively attaching, to the separator layer in a strip shape, label-type oxygen absorbing agents in which the base layer having the adhesive layer, the oxygen absorbing resin layer and the gas permeable layer are laminated.

The label-type oxygen absorbing agent with the above-described structure according to this invention is a flat plate shape, has smooth surfaces and is thin. It has sufficient flexibility, can be well pasted and fixed, and will not create the impression that something bulky is put in a package in an obstructive manner. An appropriate thickness of the label-type oxygen absorbing agent is selected in the range of 0.1 to 5 mm and preferably in the range of 0.2 to 3 mm. However, a thinner label-type oxygen absorbing agent is more preferred in order not to hinder winding of the continuous member or handling at a pasting machine. Moreover, an appropriate shape can be freely selected according to an intended purpose among, for example, a square, a rectangle, a circle or an oval.

In order to manufacture the label-type oxygen absorbing agent according to this invention, for example, the following methods are adopted:
(1) The separator layer is previously pasted over one surface of the base layer and an adhesive surface is provided on the opposite surface of the base layer. Then the sheet-shaped oxygen absorbing member is adhesively attached and fixed to the adhesive surface of the base layer with the separator layer. The gas permeable layer is laminated over the above-obtained base layer so that the base layer will be completely covered, and the laminated layers are pressed until the gas permeable layer is completely adhesively attached to the base layer. Die cutting (half die cutting) is then performed by using a cutting die to cut the portions of the laminated layers, which extend beyond the periphery of the sheet-shaped oxygen absorbing member, in such a depth as to cut the base layer from above. Finally, the useless portions of the base layer and the gas permeable layer outside the die cut lines are peeled off the separator layer, thereby obtaining a label-type oxygen absorbing agent.
(2) The base layer with the separator layer is prepared by adhesively attaching the separator layer to one surface of the base layer and by providing a heat seal agent surface on the opposite surface of the base layer. The sheet-shaped oxygen absorbing member is retained under the gas permeable layer and these layers are laminated over the heat seal agent surface of the base layer with the separator layer. A heat jig in a predetermined shape is pressed onto the laminated layers to heat and adhesively attach the base layer to the gas permeable layer along the periphery of the sheet-shaped oxygen absorbing member. Finally, a cutting die is used and half die cutting is performed to cut the above-obtained layers along the peripheries of the heated and attached portions, leaving the separator layer uncut. The useless portions of the base layer and the gas permeable layer outside the die cut lines are peeled off the separator layer, thereby obtaining a label-type oxygen absorbing agent.
(3) The gas permeable layer is provided with a gas-permeable adhesive surface and the sheet-shaped oxygen absorbing member is adhesively attached to the gas-permeable adhesive surface of the gas permeable layer. The base layer, which has the separator layer adhesively attached on one surface, is laminated over the above-obtained layers and the base layer is adhesively attached to the gas permeable layer through the gas permeable adhesive surface along the periphery of the sheet-shaped oxygen absorbing member. Finallyl a cutting die is used and half die cutting is performed to cut the above-obtained layers along the periphery of the adhesively attached portions and the useless portions outside the die cut lines are peeled off the separator layer, thereby obtaining a label-type oxygen absorbing agent.

Any of the above-described methods makes it possible to easily obtain a continuous member of label-type oxygen absorbing agents, where the label-type oxygen absorbing. agents are intermittently placed in succession over the strip-shaped separator layer. It is also possible to perform the above-described steps continuously. Needless to say, if the half die cutting is not performed by the above-described methods and if the cutting die is pressed through the laminated layers until it cuts off the separator layer, a separate product will be manufactured. It is also possible to manufacture a separate product by cutting the continuous member. The method of manufacturing the label-type oxygen absorbing agent is not limited to the methods described above as long as such a method satisfies requirements of this invention.

### [EXAMPLES]

This invention is hereinafter explained by referring to examples.

### [Example 1] [Comparison 1] [Comparison 2]

### Manufacture of the Sheet-Shaped Oxygen Absorbing Member:

Iron powder was coated with sodium chloride in the proportion of 100 parts by weight of iron powder to 3 parts by weight of sodium chloride. One hundred parts by weight of such coated iron powder (median diameter on a weight basis: 70 µm) and 100 parts by weight of polyethylene were mixed and extruded into a sheet shape at a temperature of 190°C. Then the extruded sheet was drawn to the longitudinal direction to four times the original size and micropores were made in the drawn sheet, thereby obtaining an oxygen absorbing resin sheet (thickness: 1 mm) which is a material roll to make the sheet-shaped oxygen absorbing member. The oxygen absorbing velocity of this oxygen absorbing resin sheet was 200 ml/m²·Hr (25°C) or more.

The obtained material roll of the oxygen absorbing resin sheet was made to go through and was pressed by a roll which comprises blades (blade width: 0.15 mm; blade angle: 40 degrees) in a parallel lattice pattern with a distance of 4 mm between lattice-forming blades and at an oblique angle of 45 degrees so that grooves would be cut, leaving a thickness of 0.6 mm as the uncut remaining portion of the sheet. As a result, parallel lattice-shaped grooves at an angle of 45 degrees (distance between the lattice-forming grooves: 4 mm; thickness of the uncut remaining portion of the sheet: 0.06 mm) were cut in the material roll sheet. Subsequently, die cutting was performed to cut the material roll sheet, which had undergone the groove cut processing, into a rectangular shape (a longer side length of 40 mm x a shorter side length of 18 mm), thereby obtaining a rectangular sheet-shaped oxygen absorbing member. Moreover, die cutting of the material roll of the oxygen absorbing resin sheet was performed without the groove cut processing, thereby obtaining another rectangular sheet-shaped oxygen member for a comparison purpose.

Synthetic rubber elastomer-based adhesive agent was applied on both surfaces of an opal polypropylene film (thickness: 40 µm; and width: 100 mm) and silicon coated paper (release paper) was pasted on one surface of the above-obtained opal polypropylene film, thereby preparing the base layer with the separator layer. Then, a high density polyethylene span bond nonwoven cloth (product name: TYVEK, manufactured by Du Pont) was prepared as the gas permeable layer.

### Manufacture of the Label-Type Oxygen Absorbing Agent:

As a first step, the rectangular sheet-shaped oxygen absorbing member (a longer side length of 40 mm x a shorter side length of 18 mm; and thickness: 1 mm) with its groove surface placed on top was pasted intermittently at an interval of 57 mm, with its shorter side of the rectangular being placed perpendicularly to a proceeding direction, on an adhesive surface of the long strip-shaped base layer (width: 36 mm) with the separator layer. As a second step, the gas permeable layer with its gas permeable adhesive sheet surface facing down was placed over and was pressed against the layers obtained by the first step, thereby securing and adhesively attaching the gas permeable layer to the base layer along the periphery of the rectangular sheet-shaped oxygen absorbing member. As a following third step, a cutting die (a rectangular shape with a longer side length of 54 mm x a shorter side length of 30 mm) was moved down onto the sheet obtained by the second step by aiming at the rectangular sheet-shaped oxygen absorbing member which was held between other layers, thereby cutting the gas permeable layer and the base layer in a rectangular shape, leaving the separator layer placed at the bottom uncut. As a final fourth step, the gas permeable layer and the base layer were peeled off, so that the portion of the rectangular sheet-shaped oxygen absorbing member which had been die cut remained. Finally, a continuous member of label-type oxygen absorbing agents, where the rectangular label-type oxygen absorbing agents (a longer side length of 54 mm x a shorter side length of 30 mm) were pasted on the strip-shaped separator layer (release paper), was wound into a roll (paper roll with an outside diameter of 90 mm). A label-type oxygen absorbing agent which used the sheet-shaped oxygen absorbing member with the grooves cut in the parallel lattice shape at an oblique angle of 45 degrees is hereinafter referred to as a label-type oxygen absorbing agent A, and a label-type oxygen absorbing agent which used the sheet-shaped oxygen absorbing member without grooves is hereinafter referred to as a label-type oxygen absorbing agent X.

### Three-Side Pillow Seal Packaging for Automatically Pasting the Label-Type Oxygen Absorbing Agent:

An automatic packaging device which comprises a horizontal form/fill/seal packing machine (manufactured by Japan Polystar, Inc.) with an automatic labeler (manufactured by EDM) mounted thereon was used and rolled continuous members of the label-type oxygen absorbing agent A and the label-type oxygen absorbing agent x were used to manufacture a dorayaki (bean-jam pancake) package which is a three-side pillow seal packaging bag with the label-type oxygen absorbing agent pasted on its back paste (pillow) side and in which a dorayaki is enclosed. Example 1 is the case where the label-type oxygen absorbing agent A was used, and Comparison 1 is the case where the label-type oxygen absorbing agent X was used. Moreover, another dorayaki package was manufactured as Comparison 2 without pasting the label-type oxygen absorbing agent.

First, the label-type oxygen absorbing agent, of which the separator layer had been peeled off, was pasted on an LLDPE surface, which was the inside surface, of a transparent gas-permeation-resistant film (structure: KON (15 µm)/PE (20 µm)/LLDPE (60 µm); and width: 285 mm), which was continuously fed to the horizontal form/fill/seal packing machine, by using the automatic labeler and by deciding, as a center position, the position 32 mm apart from the edge of the film and by leaving a space of 130 mm between the oxygen absorbing agents so that the label-type oxygen absorbing agent would be placed at the back paste portion of the bag. As the following step, the moving direction of the film with the label-type oxygen absorbing agent pasted thereon was changed on a former, thereby forming and heat sealing the back paste portion. Then, one dorayaki was put in a bag portion, on which one label-type oxygen absorbing agent was pasted for each bag, and a bag opening (which was also a bag bottom seal portion of a next bag) was heat sealed. Finally, this heat sealed portion was cut. Accordingly, a dorayaki package which is a three-side pillow seal packaging bag (size: 130 mm x 120 mm) for packaging a circular dorayaki (outside diameter: about 80 mm; and thickness: about 30 mm) in a hermetically sealed manner was continuously manufactured in succession.

As a result of comparison of the conditions of the packaging steps, in the case of Example 1 where the label-type oxygen absorbing agent A (with lattice-shaped grooves at an oblique angle of 45 degrees) was used, the label-type oxygen absorbing agent well followed the movement of the film on the former and never proceeded in a zigzag line just as in the case of Comparison 2 where the label-type oxygen absorbing agent was not pasted. In addition, the back pasting was conducted in normal condition, the label-type oxygen absorbing agent was pasted at a predetermined position of the bag, and the packaged state was good without any bad condition in heat sealing. On the other hand, in the case of Comparison 1 where the label-type oxygen absorbing agent X (without grooves) was used, when the movement of the film with the label-type oxygen absorbing agent pasted thereon was changed, the label-type oxygen absorbing agent did not have enough flexibility to follow the bending movement of the film and an excessive tension was imposed on the film. As a result, the label-type oxygen absorbing agent sometimes fell off or the adhesion state sometimes turned out to be bad. In addition, the film proceeded in a zigzag line, causing various problems such as placement of the back paste portion at a wrong position and a had sealing condition. After all, it was impossible to smoothly manufacture a package with the label-type oxygen absorbing agent properly pasted thereon. In conclusion, it was confirmed that the label-type oxygen absorbing agent according to this invention has good adaptability to the automatic pasting and packaging.

Moreover, when the rolled continuous member of the label-type oxygen absorbing agent X without grooves is stored, curls caused by being wound into a roll tend to stay. In the case of Comparison 1 where the label-type oxygen absorbing agent X was used, curls were not reformed when the label-type oxygen absorbing agent was pasted on the film by the automatic labeler, thereby resulting in inconsistent adhesive strength of the label-type oxygen absorbing agent and causing a more serious problem of a bad pasting condition. On the other hand, with the rolled continuous member of the label-type oxygen absorbing agent A with grooves, curls caused by being wound into a roll barely stayed when it was stored for a long period of time. Even when such curls stayed, the curls were easily reformed and straightened and, therefore, a bad pasting condition did not occur. Also with regard to the pasting to the film by means of the automatic labeler in Example 2 and Comparison 3, the effect of grooves upon such curls caused by being wound into a roll was noticeably recognized.

### Preservation Test of Dorayaki:

Two types of dorayaki packages, i.e., packages of Example 1 (with the label-type oxygen absorbing agent pasted) and packages of Comparison 2 (without the label-type oxygen absorbing agent pasted), four pieces for each type, were preserved indoor at an temperature of 25°C. After preservation for 10 days, the oxygen content within the packages was measured by gas chromatograph. Then, the packages were opened and the properties of dorayaki were examined. Table 1 shows the results.

**[Table 1]**

| Preservation Test of Dorayaki | | | |
|---|---|---|---|
| | | After Preservation for 10 days | |
| Sample | | Oxygen Content within the Bag | Properties of dorayaki |
| Example 1 | 1 | < 0.01% | Quality maintained in good condition |
| | 2 | < 0.01% | Quality maintained in good condition |
| | 3 | < 0.01% | Quality maintained in good condition |
| | 4 | < 0.01% | Quality maintained in good condition |
| Comparison 2 | 1 | 5.44% | Inedible with much mold |
| | 2 | 6.88% | Inedible with much mold |
| | 3 | 9.12% | Inedible with much mold |
| | 4 | 7.14% | Inedible with much mold |

### [Example 2] [Comparison 3] [Comparison 4]

### Manufacture of the Label-Type Oxygen Absorbing Agent:

The material roll of the oxygen absorbing resin sheet (thickness: 1 mm) manufactured in Example 1 was made to go through a roll with lengthwise and widthwise parallel groove blades in a lattice shape, thereby cutting lengthwise and widthwise parallel grooves in a lattice shape (distance between the lattice-forming grooves. 4 mm; and thickness of the remaining uncut portion of the sheet: 0.06 mm) in the oxygen absorbing resin sheet. Then, die cutting of this sheet was performed to obtain a rectangular sheet-shaped oxygen absorbing member (a longer side length of 40 mm x a shorter side length of 18 mm). The rectangular sheet-shaped oxygen absorbing member on which the groove cut processing had been performed was used to manufacture a rolled continuous member of a label-type oxygen absorbing agent B in the same manner as in Example 1.

### Tray Packaging for Automatically Pasting the Label-Type Oxygen Absorbing Agent to a Top Film:

A multi-row automatic packaging device made by providing a deep drawing machine (manufactured by Multivac, Inc.) with a multi-row automatic labeler (manufactured by MR) was used and rolled continuous members of the label-type oxygen absorbing agent B (with lengthwise and widthwise parallel grooves in a lattice shape) and the label-type oxygen absorbing agent X (without grooves) were used to manufacture sliced ham packages with the label-type oxygen absorbing agent pasted thereon as described below. Example 2 is the case where the label-type oxygen absorbing agent B was used and Comparison 3 is the case where the label-type oxygen absorbing agent X was used. As Comparison 4, a sliced ham package was manufactured without pasting the label-type oxygen absorbing agent.

The deep drawing packaging machine was used in the following processing. First, the sheet was formed into a tray (size: 180 mm long x 200 mm wide x 10 mm deep). Then, along with three-row flows of such trays, each of which contained three slices of circular sliced ham (outside diameter: about 130 mm) of about log, the label-type oxygen absorbing agents were intermittently pasted, by using the multi-row automatic labeler, at predetermined intervals in three rows in parallel to each other on the LLDPE surface of the same transparent gas-permeation-resistant film as that used in Example 1, which was continuously fed as a top film for the tray. Subsequently, the movement of the film with the label-type oxygen absorbing agents pasted thereon was changed and the film was placed over the tray containing the sliced ham by causing the surface of the film where the label-type oxygen absorbing agent was pasted to face inside of the tray. As nitrogen substitution was performed so that the oxygen content would become about 5%, the film and the tray were heat sealed on the periphery of the tray, thereby manufacturing a sliced ham package continuously in a three-row automatic pasting and packaging method.

As a result of comparison of the condition of the automatic pasting and packaging steps, in the case of Comparison 3 where the label-type oxygen absorbing agent X (without grooves) was used, when the movement of the film with the label-type oxygen absorbing agent pasted thereon was changed by a turn roll, the label-type oxygen absorbing agent did not have enough flexibility to follow the shape of the turn roll. Consequently, the label-type oxygen absorbing agent which had been once pasted sometimes fell off or, even if it did not fall off, its adhesion condition was bad. As a result, it was found that pasting of the label-type oxygen absorbing agents was not conducted consistently as some label-type oxygen absorbing agents were not enclosed in the sliced ham packages or, even if they were pasted, some fell off within the packages during the above-described step. In addition, troubles were often caused in relation to curls remained on the rolled continuous member of the label-type oxygen absorbing agents. In contrast, in the case of Example 2 where the label-type oxygen absorbing agent B (with lengthwise and widthwise parallel grooves in a lattice shape), there was no curling trouble and there was no problem even when the movement of the film with the label-type oxygen absorbing agents pasted thereon was changed by the turn roll. As a result, the automatic pasting and packaging of the sliced ham packages was performed in good condition.

### Preservation Test of Sliced Ham:

Two types of sliced ham packages, i.e., packages of Example 2 and packages of Comparison 4, four pieces for each type, were once kept in a dark place at a temperature of 5°C for three days and then were stored under irradiation of a fluorescent light at a temperature of 5°C for 24 days. Thereafter, the oxygen content within the bags was measured by gas chromatograph and then the bags were opened and the properties of the sliced ham were examined. Table 2 shows the results.

**[Table 2]**

| Preservation Test of Sliced Ham | | | |
|---|---|---|---|
| | | After Preservation for 27 days | |
| Sample | | Oxygen Content within the Bag | Properties of Sliced Ham |
| Example 2 | 1 | < 0.01% | Quality maintained in good condition |
| | 2 | < 0.01% | Quality maintained in good condition |
| | 3 | < 0.01% | Quality maintained in good condition |
| | 4 | < 0.01% | Quality maintained in good condition |
| Comparison 4 | 1 | 0.84% | Rotten smell and discoloration |
| | 2 | 0.22% | Rotten smell and discoloration |
| | 3 | 0.77% | Rotten smell and discoloration |
| | 4 | 0.61% | Rotten smell and discoloration |

### [Example 3] [Comparison 5]

### Manufacture of the Label-Type Oxygen Absorbing Agent with Deodorizing Layer

Iron powder (median diameter on a weight basis: 70 µm) coated with sodium chloride was mixed with polyethylene and the mixture was extruded at a temperature of 190°C and the extruded material was formed into a sheet in the same manner as in Example 1. This sheet was then drawn to a longitudinal direction to six times the original size and micropores were made in the drawn sheet, thereby preparing an oxygen absorbing resin sheet with a thickness of 800 µm. Moreover, activated carbon paper (thickness: 70 µ m) which was obtained by mixing 13 parts by weight of powder activated carbon, which has such a particle diameter as to allow the particles to pass through a 325 mesh sieve, with 87 parts by weight of pulp and by forming the mixture into a paper form was laminated by means of extrusion lamination over the oxygen absorbing resin sheet through an adhesive layer (thickness: 30µm) of low density polyethylene, thereby manufacturing a material roll sheet of a sheet-shaped oxygen absorbing member (thickness: 900 µm) with a deodorizing layer.

The material roll sheet of the sheet-shaped oxygen absorbing member with the deodorizing layer was pressed against a needle roll, which comprises a large number of metal needles (diameter: 0.7 mm; length: 1 mm; and needle point angle: 35 degrees) with a widthwise distance of 2 mm between the needles and with a lengthwise distance of 2 mm between the needles over the surface of the roll, by making the deodorizing side of the material roll sheet to contact the needle roll, thereby making air holes in the sheet in a manner such that the air holes were pierced from the deodorizing layer surface and through the polyethylene adhesive layer and reach the oxygen absorbing resin layer (the size of one air hole in the adhesive layer: from 0.02 mm² to 0.04 mm²). Subsequently, die cutting was performed to cut the sheet-shaped oxygen absorbing member with the deodorizing layer, which had undergone the perforation processing, into a rectangle (a longer side length of 40 mm x a shorter side length of 18 mm) and the obtained rectangular sheet-shaped oxygen absorbing member was placed with its oxygen absorbing resin layer side on top to manufacture a label-type oxygen absorbing agent C in the same manner as in Example 1. For the comparison purpose, a material roll sheet of the sheet-shaped oxygen absorbing member with the deodorizing layer which had not undergone the perforation processing was used to manufacture a label-type oxygen absorbing agent Y in the same manner.

### Preservation Test of Pie:

First, the separator layer was peeled off and one piece of the label-type oxygen absorbing agent was pasted on the inside surface of a three-side pillow seal packaging bag (size: 130 mm x 120 mm) made of a transparent gas-permeation-resistant film. One piece of pie (sweet stuff made by covering a bean jam with a piecrust) was put in the packaging bag, which was then heat sealed to manufacture a pie package. A plurality of pie packages with the label-type oxygen absorbing agent C pasted thereon and a plurality of pie packages with the label-type oxygen absorbing agent Y pasted thereon were stored indoor at a temperature of 25°C to carry out a preservation test. After a predetermined period of time had passed, the oxygen content within the packages was analyzed. Then, the packages were opened to examine the properties of the pies and a sensory test was conducted with regard to an odor. Table 3 shows the results of the odor test.

**[Table 3]**

| Odor Sensory Test of Pies | | | | | | |
|---|---|---|---|---|---|---|
| | Evaluation of Odor/Number of Preservation Days | | | | | |
| | 1 day | 2 days | 3 days | 6 days | 10 days | 14 days |
| Example 3 | - | - | - | - | - | - |
| Comparison 5 | + | ++ | ++ | + | + | + |

### Evaluation of Odor

-: without any smell of metal
+: with a slight smell of metal
++: with a smell of metal

As apparent from Table 3, a bad odor was recognized with the pie of Comparison 5 where the label-type oxygen absorbing agent Y did not undergo the perforation processing. In the case of Comparison 5, as in the case of Example 3 where the label-type oxygen absorbing agent C was used, the oxygen content within the hermetically sealed package was kept 0.01% or less and the properties of the pie were the same as those of Example 3, except for the bad odor.

### [Example 4] [Example 5] [Example 6]

Grooves were cut in the material roll sheet of the sheet-shaped oxygen absorbing member (thickness: 0.9 mm), on which the perforation processing was performed in Example 3, and a material roll sheet (thickness: 0.9 mm), which had not undergone the perforation processing, by using a roll with parallel lattice-shaped groove blades (the distance between the groove blades: 4 mm) at an oblique angle of 45 degrees in a manner such that the thickness of the remaining uncut portion of the sheet would become 0.12 mm from the bottom of the groove to the opposite uncut surface of the sheet. Then the die cutting of the sheet was performed, thereby obtaining a rectangular sheet-shaped oxygen absorbing member (a longer side length of 40 mm x a shorter side length of 18 mm). The obtained rectangular sheet-shaped oxygen absorbing member was used and the oxygen absorbing resin layer side was placed on top to manufacture a label-type oxygen absorbing agent D and a label-type oxygen absorbing agent E. With the label-type oxygen absorbing agent E which used the sheet-shaped oxygen absorbing member with the deodorizing layer which had not undergone the perforation processing, the grooves cut in the oxygen absorbing resin layer of the sheet-shaped oxygen absorbing member did not reach the adhesive layer. Then, a label-type oxygen absorbing agent F was manufactured by cutting grooves in the sheet-shaped oxygen absorbing member with the deodorizing layer, which had not undergone the perforation processing, in a manner such that the grooves pierced through the adhesive layer and reached the deodorizing layer and the thickness of the remaining uncut portion of the sheet became 0.06 mm from the bottom of the groove to the opposite uncut surface of the sheet.

Rolled continuous members of the above-described three kinds of label-type oxygen absorbing agents with oblique and parallel lattice-shaped grooves (the distance between the lattice-forming grooves: 4 mm) were used and the horizontal form/fill/seal automatic packaging device with the automatic labeler was used to enclose a pie in a transparent gas-permeation-resistant three-side pillow seal packaging bag (size: 130 mm x 120 mm), which has one label-type oxygen absorbing agent pasted on the back paste portion on the inside surface of the packaging bag, thereby manufacturing a pie package. Example 4 is the case where the label-type oxygen absorbing agent D was used, Example 5 is the case where the label-type oxygen absorbing agent E was used, and Example 6 is the case where the label-type oxygen absorbing agent F was used. In any of these cases, the automatic pasting of the label-type oxygen absorbing agents was conducted properly and the automatic packaging of the pie packages proceeded in normal condition.

A plurality of pie packages of each type, respectively containing the label-type oxygen absorbing agent pasted thereon and hermetically sealed and packaged therein, were stored indoor at a temperature of 25°C. After a predetermined period of time had passed, the oxygen content within the pie packages was analyzed. Then, the packages were opened to examine the properties of the pies and a sensory test was also performed with regard to an odor. As Table 4 shows the results, in the case of Example 6 where the label-type oxygen absorbing agent F with grooves of the sheet-shaped oxygen absorbing member not reaching the adhesive layer and without air holes being formed in the deodorizing layer was used, a smell of metal was recognized from the stored pie.

**[Table 4]**

| Preservation Test of Pies | | | | | |
|---|---|---|---|---|---|
| | Oxygen Absorbing Agent Used | After Preservation for 14 days | | Evaluation of Odor/ Number of Preservation Days | |
| | | Oxygen Content within the Bag | Properties of Pie | 3 days | 14 days |
| Example 4 | D | <0.01% | Quality maintained in good condition | - | - |
| Example 5 | E | <0.01% | Quality maintained in good condition | ++ | + |
| Example 6 | F | <0.01% | Quality maintained in good condition | - | - |

### Evaluation of Odor

-: without any smell of metal
+: with a slight smell of metal
++: with a smell of metal

As apparent from Table 4 in the case of Example 5 where the label-type oxygen absorbing agent E was used, of which grooves did not reach the adhesive layer of the sheet-shaped oxygen absorbing member and in which no air holes were formed in the deodorizing layer, the automatic packaging of foodstuffs was conducted without any problem and the properties of the pies were maintained in good condition. However, a smell of metal was recognized after the preservation. On the other hand, in the case of Examples 4 and 6 where the label-type oxygen absorbing agent D or F with the air holes formed in the deodorizing layer was used, the automatic packaging of foodstuffs was conducted without any problem and no smell of metal was recognized after the preservation and the pies were preserved in very good condition. Depending on the kind of foodstuffs to be preserved, it is necessary to apply the label-type oxygen absorbing agent concerning which both the flexibility and the deodorizing ability have been improved.

As grooves are cut in the sheet-shaped oxygen absorbing member, the label-type oxygen absorbing agent according to this invention has sufficient flexibility and is capable of complying with complicated shapes of an article on which the oxygen absorbing agent is pasted, and is also capable of being tightly pasted. Moreover, once the label-type oxygen absorbing agent is pasted, it is capable of flexibly following changes in the shape of the article on which the oxygen absorbing agent is pasted, and it will neither result in the state of incomplete adhesion nor fall off. Particularly in a case where a film with the label-type oxygen absorbing agents automatically pasted thereon is used to form a packaging bag and an article to be packaged is automatically packaged at the same time, bad pasting condition of the label-type oxygen absorbing agents will not occur, or a problem of bad formation of packaging bags will not be caused by the zigzag movement of the film or bad sealing condition attributable to lack of flexibility of the pasted label-type oxygen absorbing agent. The label-type oxygen absorbing agent according to this invention has flat and smooth surfaces and is thin. Since it has no sense of thickness of bulkiness, it does not create the impression that something bulky is put in a package in an obstructive manner. It is easy to handle such a label-type oxygen absorbing agent. It is possible to fix the label-type oxygen absorbing agent with certainty and to perform the step of peeling off the separator layer through the step of pasting the oxygen absorbing agent not only manually, but also mechanically through the introduction of the automatic labeler. Therefore, it is possible to freely incorporate the above-described steps into a step of automatically packaging articles such as foodstuffs and to contribute to power saving in the work of oxygen absorber packaging.

Moreover, with the label-type oxygen absorbing agent according to this invention which comprises the deodorizing layer, provision of the air holes in the adhesive layer attached to the oxygen absorbing resin layer noticeably improves the deodorizing performance and, therefore, abounds in the deodorizing performance compared to conventional oxygen absorbing agents. Accordingly, no odor will be generated such as an odor emitting from the oxygen absorbing resin layer during the use or a bad smell caused by deterioration of an odor of a food product, With the label-type oxygen absorbing agent according to this invention, there is no possibility of leakage of the oxygen absorbing agent due to breakage of a packaging bag as is in the case of a conventional oxygen absorbing agent bag. The side edges of the sheet-shaped oxygen absorbing member are not exposed and there is no leakage of the oxygen absorbing composition. Accordingly, the label-type oxygen absorbing agent provides excellent safety and sanitation. Such excellent oxygen absorbing performance and deodorizing performance are combined and, therefore, the label-type oxygen absorbing agent according to this invention is particularly effective in maintaining the quality of foodstuffs with a delicate smell or a delicate taste.

## Claims

1. A label-type oxygen absorbing agent comprising a separator layer (40), a base layer (30) comprising an adhesive surface or an adhesive layer (33) on the side in contact with the separator layer (40), a sheet-shaped oxygen absorbing member (20) which comprises an oxygen absorbing resin layer (21) made of a thermoplastic resin with an oxygen absorbing composition dispersed therein, and a gas permeable layer (10), these layers being laminated in the order listed above, said base layer (30) and said gas permeable layer (10) being adhesively attached to each other without the existence of said sheet-shaped oxygen absorbing member (20) along the periphery of said label-type oxygen absorbing agent,
wherein said label-type oxygen absorbing agent is **characterized in that** said sheet-shaped oxygen absorbing member (20) has a groove (24) cut from at least one surface thereof toward the opposite surface thereof.

2. A label-type oxygen absorbing agent according to claim 1, wherein the total length of the groove (24) over the surface of said sheet-shaped oxygen absorbing member (20) is 0.02 mm/m² or more as regards the size (projected area) of the sheet.

3. A label-type oxygen absorbing agent according to claims 1 and 2, wherein the groove (24) in said sheet-shaped oxygen absorbing member (20) is formed with a depth which makes the thickness of the remaining uncut portion of the sheet 0.01-0.5 mm from the bottom of the groove (24) to the opposite uncut surface of the sheet.

4. A label-type oxygen absorbing agent according to claims 1 through 3, wherein said oxygen absorbing member (20) is made by adhesively attaching a deodorizing layer (23) to the base layer side of the oxygen absorbing resin layer (21).

5. A label-type oxygen absorbing agent according to claim 4, wherein said groove pierces through said adhesive surface and reaches said deodorizing layer (23).

6. A label-type oxygen absorbing agent comprising a separator layer (40), a base layer (30) comprising an adhesive surface or an adhesive layer (33) on the side in contact with said separator layer (40), a sheet-shaped oxygen absorbing member (20) which comprises an oxygen absorbing resin layer (21) made of a thermoplastic resin with an oxygen absorbing composition dispersed therein, and a gas permeable layer (10), these layers being laminated in the order listed above, said base layer (30) and said gas permeable layer (10) being adhesively attached to each other without the existence of said sheet-shaped oxygen absorbing member (20) along the periphery of said label-type oxygen absorbing agent,
wherein said label-type oxygen absorbing agent is **characterized in that** said sheet-shaped oxygen absorbing member (20) has a deodorizing layer (23) attached through an adhesive layer (22) to the base layer side of said oxygen absorbing resin layer (21) and has an air hole (25) piercing through said adhesive layer (22).

7. A label-type oxygen absorbing agent according to claim 6, wherein the size (projected area) of one air hole (25) pierced through said adhesive layer (22) is at least 0.01 mm² and the number of air holes is from 1 to 5000 per 1 cm² area (projected area) of said adhesive layer (22).

8. A label-type oxygen absorbing agent according to claims 6 and 7, wherein said air hole (25) is pierced from the deodorizing-layer-side surface of said sheet-shaped oxygen absorbing member (20) and through said adhesive layer (22) and reaches said oxygen absorbing resin layer (21).

9. A label-type oxygen absorbing agent according to claims 6 through 8, wherein said deodorizing layer (23) adhesively attached to said sheet-shaped oxygen absorbing member (20) is adhesively attached to and fixed on said base layer (30).

10. A label-type oxygen absorbing agent according to claim 1 further comprising a deodorizing layer (23) which is attached through an adhesive layer (22) to the base layer side of said oxygen absorbing resin layer (21) and an air hole (25) piercing through said adhesive layer (22) is provided.

11. A label-type oxygen absorbing agent according to claims 1 through 10, wherein said oxygen absorbing resin layer (21) is made by dispersing an oxygen absorbing composition containing iron powder as a main ingredient in a thermoplastic resin to obtain a resin sheet, drawing the resin sheet and making micropores in the resin sheet.

12. A label-type oxygen absorbing agent according to claims 1 through 11, wherein a laminated member which comprises said base layer (30) having the adhesive layer, said oxygen absorbing resin layer (21) and said gas permeable layer (10) is adhesively attached intermittently and successively to said separator layer (40) in a strip shape.

## Patentansprüche

1. Etikettartiges Sauerstoffabsorptionsmittel mit einer Trennschicht (40), einer Basisschicht (30), die eine Klebstoffoberfläche oder eine Klebstoffschicht (33) auf der in Kontakt mit der Trennschicht (40) stehenden Seite aufweist, einem blatt- oder plattenförmigen (sheet-shaped) Sauerstoffabsorptionsorgan (20), welches eine sauerstoffabsorbierende Harzschicht (21) aufweist, die aus einem thermoplastischen Harz mit einer darin dispergierten Sauerstoff absorbierenden Zusammensetzung besteht, sowie einer gasdurchlässigen Schicht (10), wobei diese Schichten in der oben angegebenen Reihenfolge laminiert sind, die Basisschicht (30) und die gasdurchlässige Schicht (10) durch Klebstoff aneinander befestigt sind, ohne dass das plattenförmige Sauerstoffabsorptionsorgan (20) längs des Umfangs des etikettartigen Sauerstoffabsorptionsmittels vorhanden ist, wobei das etikettartige Sauerstoffabsorptionsmittel **dadurch gekennzeichnet ist, dass** das plattenförmige Sauerstoffabsorptionsorgan (20) eine Rille (24) aufweist, die von wenigstens einer Oberfläche desselben zur entgegengesetzten Oberfläche desselben hin eingeschnitten ist.

2. Etikettartiges Sauerstoffabsorptionsmittel nach Anspruch 1, bei welchem die Gesamtlänge der Rille (24) über die Oberfläche des plattenförmigen Sauerstoffabsorptionsorgans (20) bezüglich der Größe (projizierte Fläche) der Platte 0,02mm/m² oder mehr beträgt.

3. Etikettartiges Sauerstoffabsorptionsmittel nach Anspruch 1 und 2, bei welchem die Rille (24) in dem plattenförmigen Sauerstoffabsorptionsorgan (20) mit einer Tiefe geformt ist, welche eine Dicke des verbleibenden nicht eingeschnittenen Teils der Platte vom Boden der Rille (24) bis zur entgegengesetzten nicht eingeschnittenen Oberfläche der Platte von 0,01 - 0,5mm ergibt.

4. Etikettartiges Sauerstoffabsorptionsmittel nach den Ansprüchen 1 bis 3, bei welchem das Sauerstoffabsorptionsorgan (20) durch Klebstoffbefestigung einer desodorierenden Schicht (23) an der zur Basisschicht weisenden Seite der Sauerstoff absorbierenden Harzschicht (21) gebildet ist.

5. Etikettartiges Sauerstoffabsorptionsmittel nach Anspruch 4, bei welchem die Rille die Klebstoffoberfläche durchsticht und die desodorierende Schicht (23) erreicht.

6. Etikettartiges Sauerstoffabsorptionsmittel mit einer Trennschicht (40), einer Basisschicht (30), die eine Klebstoffoberfläche oder eine Klebstoffschicht (33) auf der in Kontakt mit der Trennschicht (40) stehenden Seite aufweist, einem plattenförmigen Sauerstoffabsorptionsorgan (20), das eine Sauerstoff absorbierende Harzschicht (21) aufweist, die aus einem thermoplastischen Harz mit einer darin dispergierten Sauerstoff absorbierenden Zusammensetzung besteht, und einer gasdurchlässigen Schicht (10), wobei diese Schichten in der oben aufgeführten Reihenfolge laminiert sind, die Basisschicht (30) und die gasdurchlässige Schicht (10) durch Klebstoff aneinander befestigt sind, ohne dass das plattenförmige Sauerstoff absorbierenden Organ (20) längs des Umfangs des etikettartigen Sauerstoffabsorptionsmittels vorhanden ist, wobei das etikettartige Sauerstoffabsorptionsmittel **dadurch gekennzeichnet ist, dass** das plattenförmige Sauerstoff absorbierende Organ (20) eine desodorierende Schicht (23) aufweist, die durch eine Klebstoffschicht (22) an der Seite der Basisschicht der Sauerstoff absorbierenden Harzschicht (21) befestigt ist und ein Luftloch (25) aufweist, welches die Klebstoffschicht (22) durchsticht.

7. Etikettartiges Sauerstoffabsorptionsmittel nach Anspruch 6, bei welchem die Größe (projizierte Fläche) eines Luftloches (25), das die Klebstoffschicht (22) durchsticht, wenigstens 0,01 mm² beträgt und die Anzahl von Luftlöchern zwischen 1 und 5000 je 1 cm² Fläche (projizierte Fläche) der Klebstoffschicht (22) beträgt.

8. Etikettartiges Sauerstoffabsorptionsmittel nach Anspruch 6 und 7, bei welchem das Luftloch (25) der desodorierenden Schicht des plattenförmigen Sauerstoff absorbierenden Organs (20) durch die Klebstoffschicht (22) durchgestochen ist und die Sauerstoff absorbierende Harzschicht (21) erreicht.

9. Etikettartiges Sauerstoffabsorptionsmittel nach einem der Ansprüche 6 bis 8, bei welchem die desodorierende Schicht (23), die durch Klebstoff an dem plattenförmigen Sauerstoff absorbierenden Organ (20) befestigt ist, durch Klebstoff an der Basisschicht (30) angebracht und befestigt ist.

10. Etikettartiges Sauerstoffabsorptionsmittel nach Anspruch 1, mit einer desodorierenden Schicht (23), welche über eine Klebstoffschicht (22) an der Seite der Basisschicht der Sauerstoff absorbierenden Harzschicht (21) befestigt ist, und wobei ein Luftloch (25) vorgesehen ist, das die Klebstoffschicht (22) durchsticht.

11. Etikettartiges Sauerstoffabsorptionsmittel nach den Ansprüchen 1 bis 10, bei welchem die Sauerstoff absorbierende Harzschicht (21) hergestellt ist, indem eine Eisenpulver als Hauptbestandteil enthaltende Sauerstoff absorbierende Zusammensetzung in einem thermoplastischen Harz dispergiert wird, um eine Harzschicht oder Harzplatte zu erhalten, die Harzschicht oder Harzplatte gezogen und Mikroporen in der Harzschicht oder Harzplatte erzeugt werden.

12. Etikettartiges Sauerstoffabsorptionsmittel nach einem der Ansprüche 1 bis 11, bei welchem ein laminiertes Organ, welches eine die Klebstoffschicht aufweisende Basisschicht (30), die Sauerstoff absorbierende Harzschicht (21) und die gasdurchlässige Schicht (10) umfasst, durch Klebstoff vorübergehend und nacheinander an der Trennschicht (40) in Streifenform befestigt wird.

## Revendications

1. Agent absorbant l'oxygène de type étiquette comprenant une couche séparatrice (40), une couche de base (30) comprenant une surface adhésive ou une couche adhésive (33) du côté en contact avec la couche séparatrice (40), un élément absorbant l'oxygène en forme de feuille (20) qui comprend une couche de résine absorbant l'oxygène (21) en résine thermoplastique dans laquelle est dispersée une composition absorbant l'oxygène, et une couche perméable aux gaz (10), ces couches étant stratifiées dans l'ordre énuméré, la couche de base (30) et la couche perméable aux gaz (10) étant fixées par adhésion l'une à l'autre sans qu'il existe d'élément absorbant l'oxygène en forme de feuille (20) le long de la périphérie de l'agent absorbant l'oxygène de type étiquette,
dans lequel l'agent absorbant l'oxygène de type étiquette est **caractérisé en ce que** l'élément absorbant l'oxygène en forme de feuille (20) comporte une rainure (24) découpée à partir d'au moins une de ses surfaces vers sa surface opposée.

2. Agent absorbant l'oxygène selon la revendication 1,
dans lequel la longueur totale de la rainure (24) sur la surface de l'élément absorbant l'oxygène en forme de feuille (20) est de 0,02 mm/m² ou plus en ce qui concerne la dimension (surface projetée) de la feuille.

3. Agent absorbant l'oxygène de type étiquette selon la revendication 1 ou 2, dans lequel la rainure (24) dans l'élément absorbant l'oxygène en forme de feuille (20) a une profondeur qui détermine l'épaisseur de la portion non découpée restante de la feuille à 0,01 à 0,5 mm à partir du fond de la rainure (24) vers la surface non découpée opposée de la feuille.

4. Agent absorbant l'oxygène de type étiquette selon l'une quelconque des revendications 1 à 3, dans lequel l'élément absorbant l'oxygène (20) est constitué en fixant par collage une couche désodorisante (23) du côté de la couche de base de la couche de résine absorbant l'oxygène (21).

5. Agent absorbant l'oxygène de type étiquette selon la revendication 4, dans lequel la rainure traverse la surface adhésive et atteint la couche désodorisante (23).

6. Agent absorbant l'oxygène de type étiquette comprenant une couche séparatrice (40), une couche de base (30) comprenant une surface adhésive ou une couche adhésive (33) du côté en contact avec la couche séparatrice (40), un élément absorbant l'oxygène en forme de feuille (20) qui comprend une couche de résine absorbant l'oxygène (21) en résine thermoplastique dans laquelle est dispersée une composition absorbant l'oxygène, et une couche perméable aux gaz (10), ces couches étant stratifiées dans l'ordre énuméré, la couche de base (30) et la couche perméable aux gaz (10) étant fixées par adhésion l'une à l'autre sans qu'il existe d'élément absorbant l'oxygène en forme de feuille (20) le long de la périphérie de l'agent absorbant l'oxygène de type étiquette,
dans lequel l'agent absorbant l'oxygène de type étiquette est **caractérisé en ce que**, à l'élément absorbant l'oxygène en forme de feuille (20) est fixée une couche désodorisante (23) fixée, par l'intermédiaire d'une couche adhésive (22), au côté de la couche de base de la couche de résine absorbant l'oxygène (21) et **en ce qu'**un trou d'aération (25) traverse la couche adhésive (22).

7. Agent absorbant l'oxygène de type étiquette selon la revendication 6, dans lequel la dimension (surface projetée) d'un trou d'aération (25) percé à travers la couche adhésive (22) est d'au moins 0,01 mm² et le nombre de trous d'aération va de 1 à 5000 par cm² de surface (surface projetée) de la couche adhésive (22).

8. Agent absorbant l'oxygène de type étiquette selon la revendication 6 ou 7, dans lequel le trou d'aération (25) est percé à partir de la surface du côté de la couche désodorisante de l'élément absorbant l'oxygène en forme de feuille (20) et par l'intermédiaire de la couche adhésive (22) et atteint la couche de résine absorbant l'oxygène (21).

9. Agent absorbant l'oxygène de type étiquette selon l'une quelconque des revendications 6 à 8, dans lequel la couche désodorisante (23) fixée par collage à l'élément absorbant l'oxygène en forme de feuille (20) est fixée par collage à la couche de base (30).

10. Agent absorbant l'oxygène de type étiquette selon la revendication 1, comprenant en outre une couche désodorisante (23) qui est fixée par l'intermédiaire d'une couche adhésive (22) du côté de la couche de base de la couche de résine absorbant l'oxygène (21), un trou d'aération (25) traversant la couche adhésive (22) étant prévu.

11. Agent absorbant l'oxygène de type étiquette selon l'une quelconque des revendications 1 à 10, dans lequel la couche de résine absorbant l'oxygène (21) est obtenue en dispersant une composition absorbant l'oxygène contenant de la poudre de fer en tant qu'ingrédient principal dans une résine thermoplastique pour obtenir une feuille de résine, en étirant la feuille de résine, et en formant des micropores dans la feuille de résine.

12. Agent absorbant l'oxygène de type étiquette selon l'une quelconque des revendications 1 à 11, dans lequel un élément stratifié, qui comprend la couche de base (30) portant la couche adhésive, la couche de résine absorbant l'oxygène (21) et la couche perméable aux gaz (10), est fixé par collage de façon intermittente et successive à la couche séparatrice (40) selon une forme de bande.
